# EUROPEAN PATENT APPLICATION

(11) **EP 4 653 130 A1**
(43) Date of publication of application: **26.11.2025**
(21) Application number: 23917693.6
(22) Date of filing: 12.12.2023
(51) Int. Cl.: B23K 26/70, B23K 26/00

(54) **OVERLOAD PROTECTION DEVICE AND LASER MACHINING DEVICE**

(30) Priority: 16.01.2023 JP 2023004399
(71) Applicant: Amada Co., Ltd., Isehara-shi, Kanagawa 259-1196 (JP)
(72) Inventor: KAWAMOTO Keiji, Isehara-shi, Kanagawa 259-1196 (JP)
(74) Representative: Grünecker Patent- und Rechtsanwälte PartG mbB
(86) International application number: PCT/JP2023/044349
(87) International publication number: WO 2024/154482

(57) **Abstract**

An overload protection device (92) includes a spherical plain bearing (SB) having an inner ring (11) and an outer ring (12). The inner ring (12) is integrated into a laser processing head (2) and is rotatably supported by the outer ring (12) within a given angle range (θm) from a normal posture position via a spherical face of the spherical plain bearing (SB). The outer ring (12) is integrated into a head support body (4) that supports the laser processing head (2) and moves in directions perpendicular to an emission direction of a laser beam (LB). An optical path space (VL) of the laser beam (La) inside the laser processing head (2) forms an airtight state with an external space (VG) of the laser processing head (2) by the outer ring (12) and the inner ring (11) during the rotation within the given angle range (θm) from the normal posture position.

## Description

### [TECHNICAL FIELD]

The present invention relates to an overload protection device, and a laser processing machine.

### [BACKGROUND ART]

A laser processing head disclosed in a Patent Literature 1 listed below moves while its upper portion is supported. The laser processing head is protected when its nozzle contacts an obstacle in order to prevent overload from applying thereto. Specifically, elastic members are provided to allow the laser processing head to lean when the nozzle contacts the obstacle. Furthermore, overload to the laser processing head is also restricted by providing shear pieces that will break due to stress concentration thereto in the lean posture of the laser processing head.

### [Citation List]

### [Patent Literature]

**[Patent Literature 1]** Japanese Patent Application Laid-Open Publication No. 2014-237149

### [SUMMARY OF INVENTION]

In the laser processing head disclosed in the Patent Literature 1, a gap is made by the lean between the leaned laser processing head and its supporting members (carriages). Therefore, the internal space (optical path space) of the laser processing head through which a laser beam passes may become communicated with the external space where fumes and other substances generated through laser processing are floating, and thus contaminated by them. It is desired to protect a laser processing head from overload without allowing an optical path space of a laser beam to be communicated with an external space when the laser processing head contacts an obstacle during its movement.

An aspect of the present invention provides an overload protection device comprising: a spherical plain bearing provided with an inner ring integrated into a laser processing head through which a laser beam is emitted, and an outer ring integrated into a head support body that supports the laser processing head and moves in directions perpendicular to an emission direction of the laser beam, wherein the inner ring is rotatably supported by the outer ring within a given angle range from a normal posture position via a spherical face of the spherical plain bearing, and wherein an optical path space of the laser beam formed inside the laser processing head forms an airtight state with an external space of the laser processing head by the inner ring and the outer ring during a rotation within the given angle range from the normal posture position.

Another aspect of the present invention provides a laser processing machine comprising: the above-mentioned overload protection device; and a controller that controls a movement of the head support body, wherein the overload protection device has a detector that outputs a detection signal when detecting the rotation of the inner ring from the normal posture position, and the controller stops the movement of the head support body based on the detection signal.

According to the aspect and the other aspect of the present invention, the laser processing head can be protected from the overload without allowing the optical path space of a laser beam to be communicated with the external space when the laser processing head contacts an obstacle during its movement.

### [BRIEF DESCRIPTION OF DRAWINGS]

**[****FIG. 1A]** FIG. 1A is a configurational diagram of a laser processing machine 91 according to an embodiment.
**[****FIG. 1B]** FIG. 1B is a perspective view showing an overload protection device 92 and a laser processing head 2 included in the laser processing machine 91.
**[****FIG. 2A]** FIG. 2A is a vertical cross-sectional view, taken on a plane including an optical axis LaC, of the overload protection device 92 in its normal posture position.
**[****FIG. 2B]** FIG. 2B is a vertical cross-sectional view of a laser processing head 2 in a lean posture state.
**[****FIG. 3]** FIG. 3 is a cross-sectional view taken along a line III-III in FIG. 2A.
**[****FIG. 4A]** FIG. 4A is an enlarged view of a portion IV in FIG. 3.
**[****FIG. 4B]** FIG. 4B is an enlarged view of the portion IV in the lean posture state.

### [DESCRIPTION OF EMBODIMENTS]

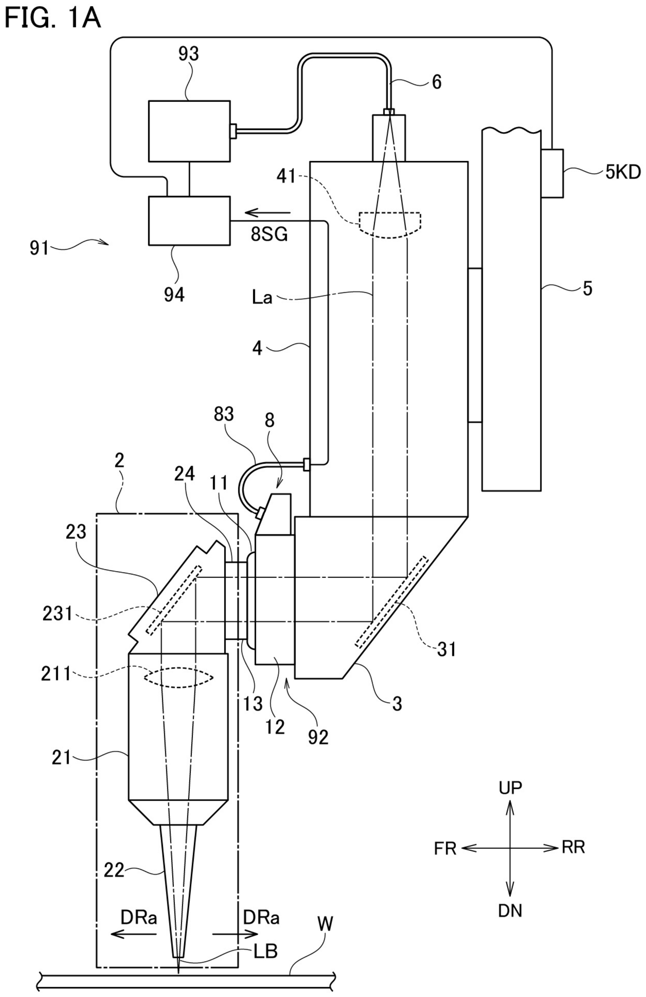

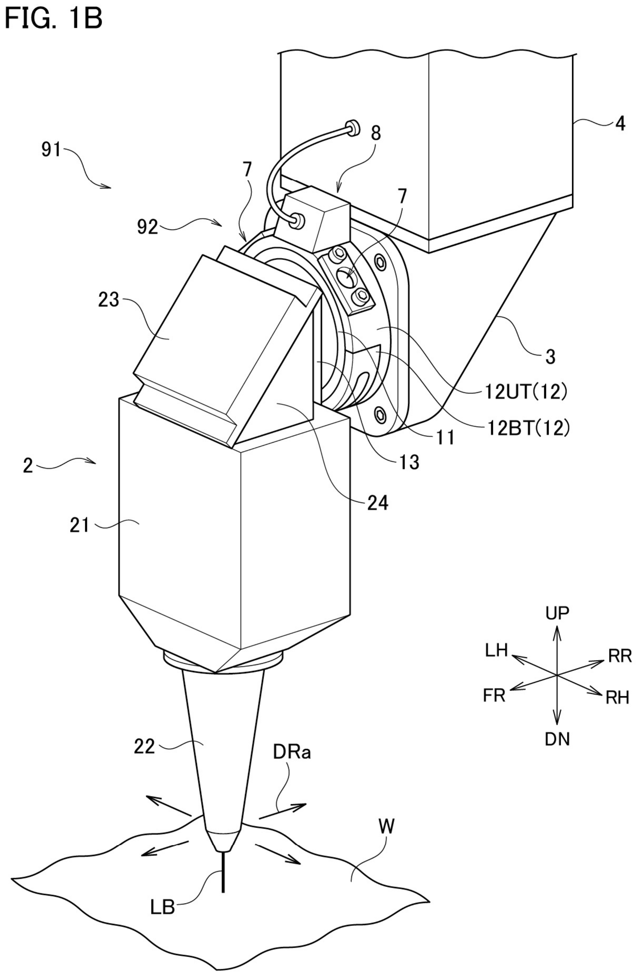

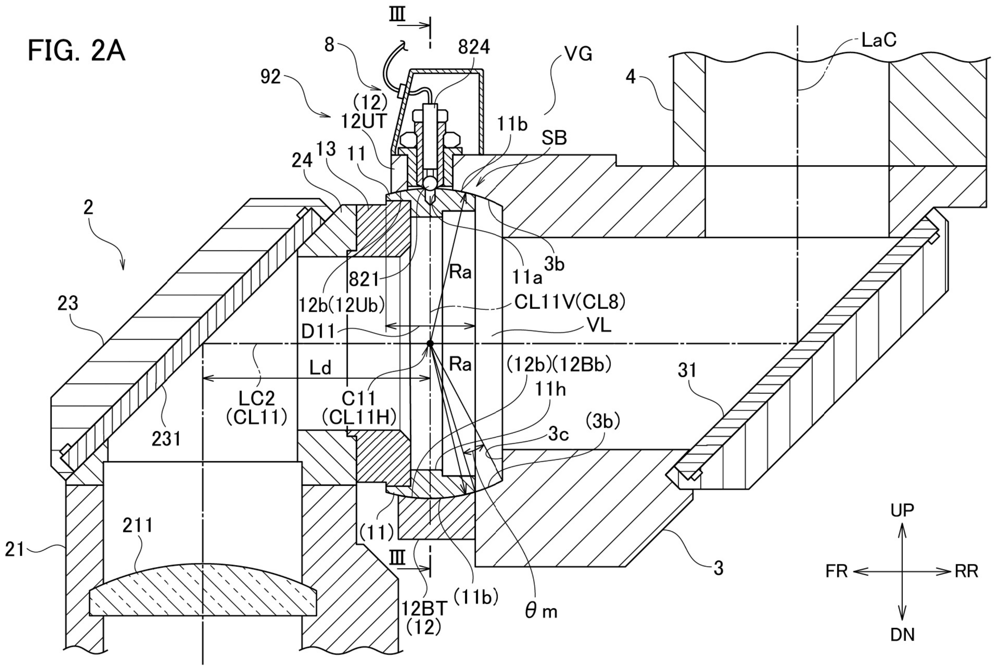

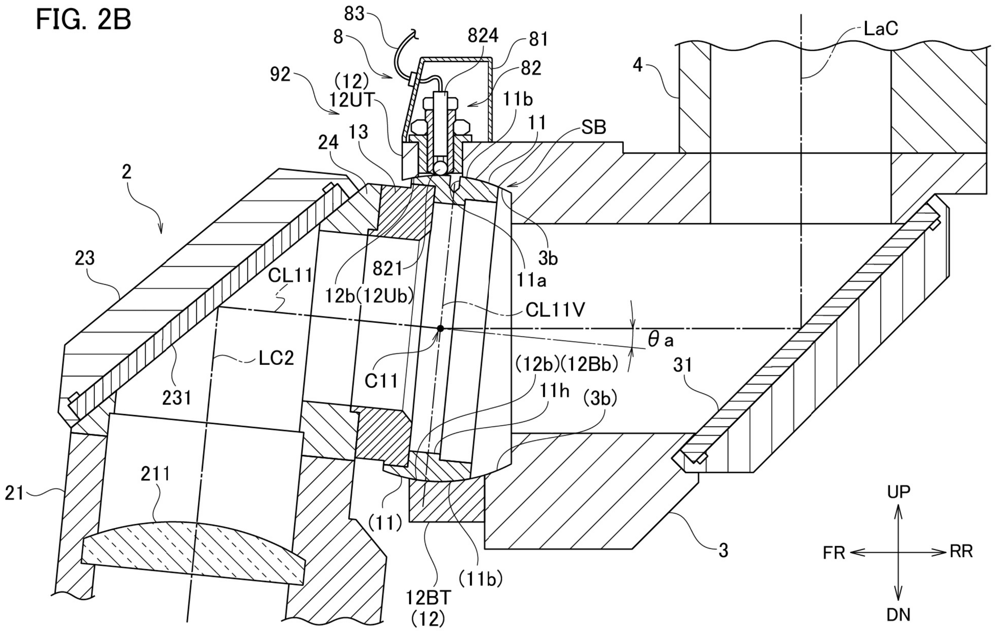

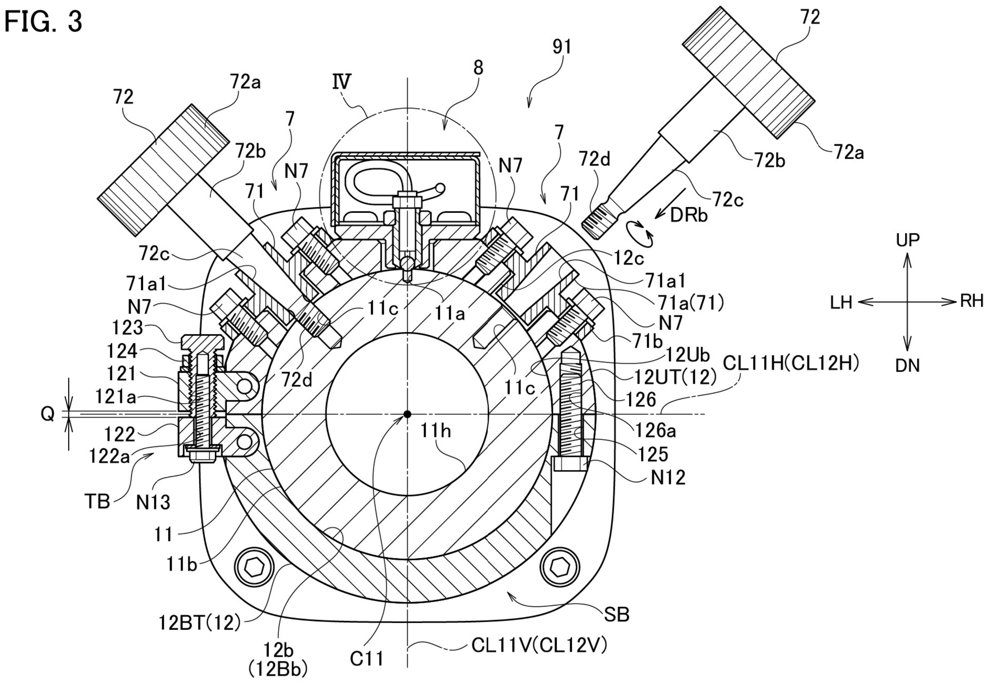

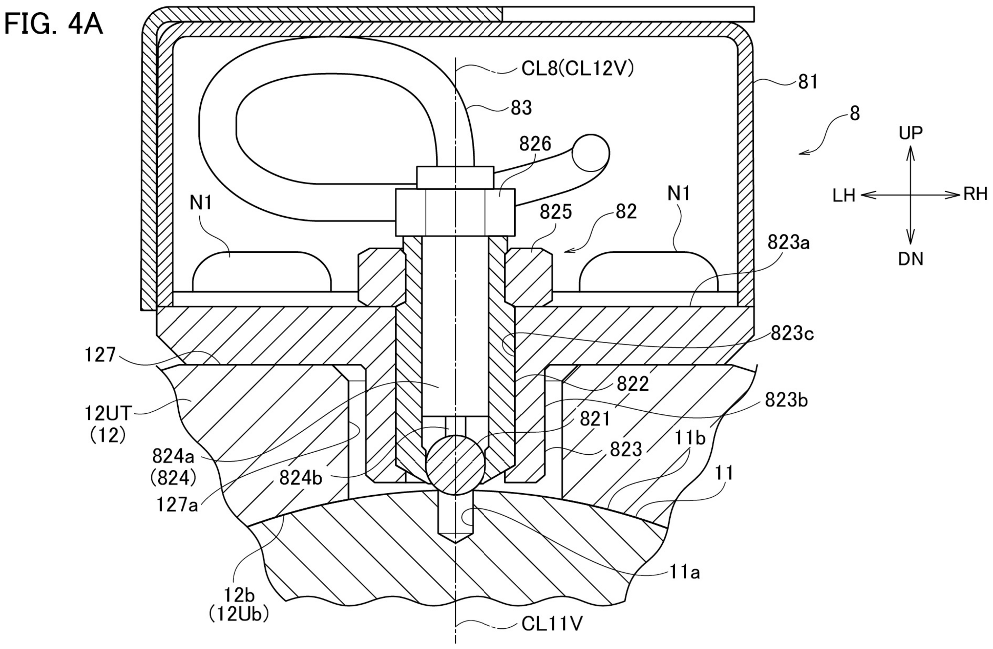

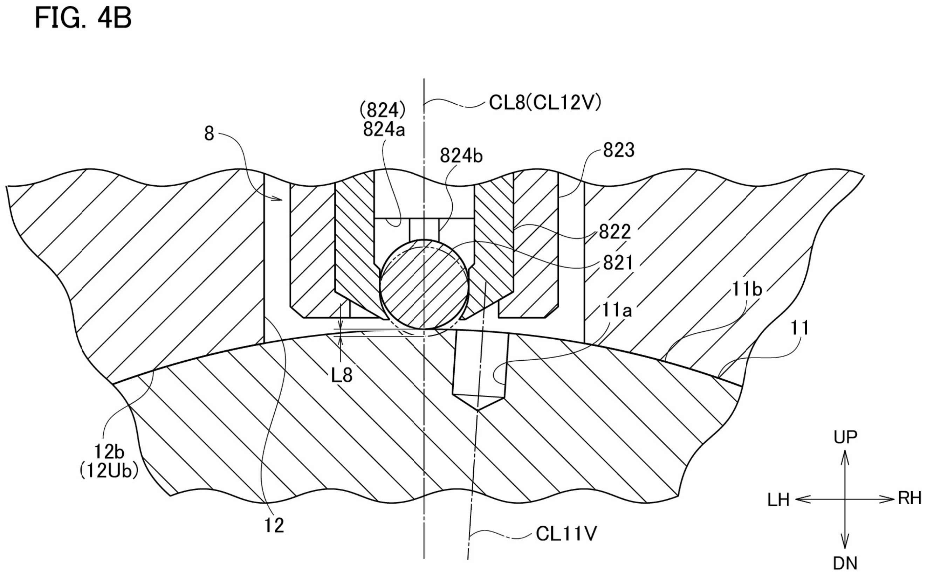

A laser processing machine 91 according to an embodiment will be described with reference to FIG. 1A through FIG. 4B. FIG. 1A is a configurational diagram of the laser processing machine 91 according to the present embodiment, and FIG. 1B is a perspective view showing an overload protection device 92 and a laser processing head 2 included in the laser processing machine 91. FIG. 2A is a vertical cross-sectional view, taken on a plane including an optical axis LaC, of the overload protection device 92 in its normal posture position, and FIG. 2B is a vertical cross-sectional view of a laser processing head 2 in a lean posture state. FIG. 3 is a cross-sectional view taken along a line III-III in FIG. 2A. FIG. 4A is an enlarged view of a portion IV in FIG. 3, and FIG. 4B is an enlarged view of the portion IV in the lean posture state. For convenience of description, upward, downward, forward, backward, leftward and rightward directions are defined by directions indicated by arrows in FIG. 1B, respectively.

As shown in FIG. 1A, the laser processing machine 91 is configured to include, at least, a laser processing head 2, an overload protection device 92, a beam deflector 3, a head support body 4, a carriage 5, a laser oscillator 93, and a controller 94. In the laser processing machine 91, the laser oscillator 93 generates a laser beam La under the control of the controller 94. The generated laser beam La passes through a process fiber 6 and is supplied to an upper end of the head support body 4, which is long in a vertical direction and retained by the carriage 5.

A collimating lens 41 is disposed at an upper portion of an interior of the head support body 4. The beam deflector 3 having a mirror 31 is mounted at a lower end of the head support body 4. The laser beam La supplied inside the head support body 4 is converted into a parallel beam by the collimating lens 41 to be emitted downward, and then deflected 90° to a horizontal direction (forward) by the mirror 31.

As shown in FIG. 1A and FIG. 1B, the laser processing head 2 is detachably attached to a front end of the beam deflector 3 with the overload protection device 92 interposed therebetween. The laser processing head 2 has an in-head deflector 23, a head main body 21, and a nozzle 22. A mirror 231 (see FIG. 1A) is disposed inside the in-head deflector 23, and a focusing lens [condenser lens] 211 (see FIG. 1A) is arranged inside the head main body 21. The nozzle 22 is attached to a lower end of the head main body 21.

As shown in FIG. 1A, the laser beam La reflected forward by the mirror 31 is further reflected downward by the mirror 231 of the in-head deflector 23, and thus its head optical axis LC2 (see FIG. 2A) is deflected 90°. The downward laser beam La is converted by the focusing lens 211 into a laser beam LB which is to be focused so as to be condensed at a processed point on a workpiece W located below the nozzle 22, and is emitted downward from a distal end of the nozzle 22.

The head support body 4 and the laser processing head 2 are moved in three dimensions by the drive unit 5KD provided in the carriage 5 under the control of the controller 94. For example, the laser processing head 2 moves in a direction orthogonal to the emitting direction of the laser beam LB (downward direction) while a distance between the workpiece W and the nozzle 22 keeps a predetermined distance (see an arrow DRa in FIG. 1A and FIG. 1B). This movement can be done with or without emitting the laser beam LB.

Next, the overload protection device 92 is described in detail with reference through FIG. 1B through FIG. 4B. As shown in FIG. 1B, the overload protection device 92 has an inner ring 11, an outer ring 12, inner ring position calibrators 7, and a detector 8. The inner ring 11 is coupled in the outer ring 12, and the inner ring 11 and the outer ring 12 configures a spherical plain bearing SB (see FIG. 2A).

As shown in FIG. 2A, the inner ring 11 is an annular member with a beam aperture 11h that is a through hole for the axis CL11. An outer circumferential face 11b of the inner ring 11 forms part of a spherical face having a radius Ra centered at a bearing center C11 throughout its thickness D11. As shown in FIG. 2A and FIG. 3, the outer ring 12 is configured by integrating an upper outer ring 12UT, which is a first outer ring having a half-ring shape, and a lower outer ring 12BT, which is a second outer ring having a half-ring shape, which are divided vertically. The upper outer ring 12UT has the detector 8 at its top, and a pair of inner ring position calibrators 7 that are located on both sides of the detector 8, respectively.

An inner face 12Ub of the upper outer ring 12UT and an inner face 12Bb of the lower outer ring 12BT are formed as part of the spherical face having the radius Ra centered at the bearing center C11. On a rear side of the inner face 12Ub and the inner face 12Bb, an inner face 3b of the beam deflector 3 is formed as a spherical face continuous with the inner face 12Ub and the inner face 12Bb. The inner faces 12Ub, 12Bb and 3b together are also referred to simply as an inner face 12b. A rear edge of the inner face 3b of the beam deflector 3 is connected to a front face 3c that is formed as a flat face perpendicular to the optical axis LaC of the laser beam La.

As shown in FIG. 3, the upper outer ring 12UT and the lower outer ring 12BT are tightened by a fixing element N12 on their right side and a fastener TB on their left side. As a result, the inner face 12Ub and the inner face 12Bb of the outer ring 12 are in close contact with the outer circumferential face 11b of the inner ring 11, and the inner ring 11 is secured to be urged toward their radial center (the bearing center C11).

A tightening force of the inner ring 11 by the upper outer ring 12UT and the lower outer ring 12BT is adjusted by an after-described structure of the fastener TB. When a force exceeding a predetermined value is applied in a direction other than the axis CL11, the inner ring 11 rotates about the bearing center C11 while its outer circumferential face 11b slides against the inner face 12b of the outer ring 12, and thus the direction of the axis CL11 changes. For example, FIG. 2B shows the axis CL11 inclined at an angle θa in the clockwise direction in the figure with respect to the optical axis LaC. The inner ring 11 is coupled in the outer ring 12 in this manner, and the inner ring 11 and the outer ring 12 form the spherical plain bearing SB in which the inner ring 11 can rotate with respect to the outer ring 12. By adjusting the tightening force by the fastener TB, a predetermined value of the force required for rotating the inner ring 11 can be changed.

The structure of the fastener TB is described with reference to FIG. 3. At a right portion of the lower outer ring 12BT in the figure, a fastening hole 125 is formed that penetrates vertically. A blind hole 126 is formed on the upper outer ring 12UT, and the blind hole 126 extends upwardly to be opposed to the fastening hole 125 and an internal thread 126a is formed in its inside. The fixing element N12, which is a bolt, is inserted into the fastening hole 125 from below, and the fixing element N12 is fastened with the internal thread 126a. As a result, the lower outer ring 12BT and the upper outer ring 12UT are integrally secured together at their right portion in the figure.

An upper fastener element 121 and a lower fastener element 122 are attached to their left portion of the upper outer ring 12UT and the lower outer ring 12BT, respectively, in the figure. A right end of the upper fastener element 121 is fixed to the upper outer ring 12UT, and its left end protrudes leftward from the upper outer ring 12UT. An internal thread hole 121a penetrating vertically is formed in a left portion of the upper fastener element 121. An internal and external threads bolt 123 is screwed into the internal thread hole 121a from above. A lock nut 124 is also screwed on an external thread of the internal and external threads bolt 123 between a head of the internal and external threads bolt 123 and the upper fastener element 121. The internal and external threads bolt 123 is secured with the upper fastener element 121 by the lock nut 124 at a given secured position.

A right end of the lower fastener element 122 is fixed to the lower outer ring 12BT, and its left end protrudes leftwards from the lower outer ring 12BT. A through hole 122a is formed in a left portion of the lower fastener element 122, which is concentric with the internal thread hole 121a of the upper fastener element 121. A fixing element N13, which is a bolt, is inserted into the through hole 122a from below and screwed into the internal thread of the internal and external threads bolt 123.

A shaft of the internal and external threads bolt 123 has a length whose end (lower end) protrudes downward from the upper fastener element 121. An end face of the internal and external threads bolt 123 contacts an upper face of the lower fastener element 122.

The fastener TB can adjust a clearance Q of a vertical gap between the upper fastener element 121 and the lower fastener element 122 by changing a secured position of the internal and external threads bolt 123 onto the internal thread hole 121a according to the above-described structure. For example, the smaller the clearance Q is made, the smaller the inner diameter of the outer ring 12 becomes and the more strongly the coupled inner ring 11 is tightened. Therefore, the force required for slide the inner ring 11 in the spherical plain bearing SB becomes larger. In other words, an initial force for provoking the rotational motion of the spherical plain bearing SB can be adjusted.

As is clear from FIG. 2A and FIG. 2B, a rotational motion of the inner ring 11 about a horizontal axis CL11H is possible within a given angle range θm (see FIG. 2A) from the normal posture position until a rear circumferential edge of the inner ring 11 touches the front face 3c of the beam deflector 3. An airtight state, in which there is virtually no clearance and through which air cannot flow, is formed between the outer circumferential face 11b of the inner ring 11 and the inner face 12b of the outer ring 12. In other words, the outer circumferential face 11b and the inner face 12b create the airtight state between them. No air can flow through between the inner ring 11 and the outer ring 12.

Next, the detector 8 is described with reference to FIG. 4A and FIG. 4B. The detector 8 has a detection member 821, a sensor sleeve 822, a sensor holder 823, a sensor 824, and a cover 81. A flat surface 127 extending horizontally is formed at an upper end of the upper outer ring 12UT. A through hole 127a with a vertical axis CL12V is formed at the center of the flat surface 127.

The sensor holder 823 has a flat base plate 823a that closely contacts the flat surface 127 and a protrusion 823b that protrudes downward from the base plate 823a to enter the through hole 127a. The protrusion 823b has an internal thread hole 823c. A center axis of the internal thread hole 823c is aligned with an axis CL8 of the protrusion 823b. An internal thread is formed on an inner face of the internal thread hole 823c. The base plate 823a of the sensor holder 823 is fastened to an internal thread (not shown in the drawings) formed in the upper outer ring 12UT by fasteners N1, which are bolts. When fastening the sensor holder 823 to the upper outer ring 12UT, the position of the sensor holder 82 can be adjusted so that the axis CL8 and the vertical axis CL12V coincide with each other.

The sensor sleeve 822 is a hollow cylindrical member, and its center axis coincides with the axis CL8. A male thread is formed on an outer circumferential face of the sensor sleeve 822 as an external thread. The sensor sleeve 822 can change its vertical position within the internal thread hole 823c without rattling by adjusting a secured position in the internal thread hole 823c of the sensor holder 823. The sensor sleeve 822 is secured in any vertical position in the sensor holder 823 by fastening a lock nut 825.

A ball is inserted into a cylindrical inner space of the sensor sleeve 822 as a detection member 821. The inner space extends along the axis CL8. An inner diameter of a lower end of the sensor sleeve 822 is made smaller than a diameter of the detection member 821, and thus the detection member 821 does not drop out downward from the sensor sleeve 822. A lower end of the detection member 821 partially protrudes downwardly from the lower end of the sensor sleeve 822.

In the inner space of the sensor sleeve 822, the sensor 824 is located above the detection member 821. The sensor 824 is secured at a predetermined vertical position in the sensor sleeve 822 by a lock nut 826.

The sensor 824 has a cylindrical sensor body 824a and a vertically movable detection rod 824b protruding downward from a lower end of the sensor body 824a. The sensor 824 is turned OFF in a state where the detection rod 824b is pushed into the sensor body 824a from its predetermined position and turned ON when the detection rod 824b protrudes beyond the predetermined position. The sensor 824 sends an ON/OFF signal to the controller 94 (see FIG. 1A) through a cord 83. The detection rod 824b is urged downward by an urging member (not shown in the drawings) in the sensor body 824a to push the detection member 821 downward.

On the other hand, the inner ring 11 has an engagement hole 11a on the outer circumferential face 11b as a recess. For example, the engagement hole 11a is formed as a blind hole whose horizontal cross-sectional shape is circular and centered on the vertical axis CL11V. The engagement hole 11a is formed so that its central axis coincides with the vertical axis CL11V extending vertically and passing through the bearing center C11 when a coupling posture of the inner ring 11 and the outer ring 12 is a posture in which the axis CL11 and the optical axis LaC coincide with each other as shown in FIG. 2A. Hereinafter, with respect to the coupling of the inner ring 11 with the outer ring 12, a position of the inner ring 11, in which the axis CL11 and the optical axis LaC coincide with each other, is referred to as a normal posture position. The normal posture position is set so that the vertical axis CL11V and the vertical axis CL12V coincide with each other by an after-described position calibrating method using the inner ring position calibrators 7. The overload protection device 92 with the inner ring 11 located in the above-described normal posture position is also referred to as the overload protection device 92 in the normal posture position.

In the normal posture position, the lower end of the detection member 821, which is urged downward by the detection rod 824b, enters the engagement hole 11a concentrically, and the detection member 821 is engaged with the engagement hole 11a. The sensor 824 is set to be turned ON due to the vertical position of the detection rod 824b that urges the detection member 821 engaged with the engagement hole 11a.

When a force exceeding a certain level is applied to the inner ring 11 from the outside, the inner ring 11 slides and rotates within the outer ring 12 from the normal posture position. Therefore, as shown in FIG. 4B, the detection member 821 is disengaged from the engagement hole 11a against the urging force of the detection rod 824b and then contacts the outer circumferential face 11b. As a result, the vertical position of the detection member 821 shifts upward by a distance L8 to move the detection rod 824b upward.

The sensor 824 is set to be turned OFF due to the vertical position of the detection rod 824b that urges the detection member 821 contacted with the outer circumferential face 11b of the inner ring 11. Therefore, an OFF signal is output from the sensor 824 and then input to the controller 94 when the inner ring 11 is rotated from the normal posture position.

The inner ring 11 is integrated with the laser processing head 2. Specifically, as shown in FIG. 1A and FIG. 2A, a mounter 13 for detachably mounting the laser processing head 2 is attached to a front end of the inner ring 11, and a mounting piece 24 of the laser processing head 2 is attached to the mounter 13. In this manner, the laser processing head 2 is integrated with the head support body 4 with the overload protection device 92 interposed therebetween.

As described above, the head support body 4 and the laser processing head 2 are moved in three dimensions by being driven by the drive unit 5KD. For example, the head support body 4 and the laser processing head 2 move along the workpiece W during the processing operation of the workpiece W using the laser beam LB. If the nozzle 22 contacts an obstacle such as a foreign object or an abnormally deformed portion of a workpiece during the movement of the laser processing head 2, the nozzle 22 is restricted from moving at least temporarily, but the head support body 4 continues to move with the carriage 5. As a result, the laser processing head 2 is getting to take a lean posture.

When the nozzle 22 contacts the obstacle, an external force is applied to the inner ring 11 integrated with the laser processing head 2. When this external force exceeds the predetermined value, the inner ring 11 rotates about the bearing center C11 while being supported by the outer ring 12, and the laser processing head 2 takes a lean posture. The detection member 821 and the detection rod 824b are shifted upward due to the rotation of the inner ring 11, and thus a detection signal 8SG (see FIG. 1A) indicating OFF is output from the sensor 824 and then input to the controller 94.

The controller 94 judges that an error has occurred in the movement of the laser processing head 2 and stops the operation of the carriage 5 after the detection signal 8SG indicating OFF is input thereto from the sensor 824. The controller 94 also stops laser output if the laser oscillator 93 is in operation.

Time from the detection time when the detection signal 8SG indicating OFF is output from the sensor 824 to the stop time when the carriage 5 stops moving is called detection-stop time. The detection-stop time is set to be sufficiently shorter than the time required for the inner ring 11 to rotate to its maximum rotation position even if the laser processing head 2 is moved at its maximum speed by the carriage 5. The detection-stop time is set to have a margin while also taking into account the time from the detection to the generation of the stop command, the time from the generation of the stop command to onset of a braking force, and the time from the onset of the braking force to the complete stop. The inner ring 11 rotates within the given angle range θm, within which it is substantially rotatable. The maximum rotation position of the inner ring 11 is the position where the rear edge of the inner ring 11 contacts the front face 3c of the beam deflector 3, as previously described.

As described above, in the laser processing machine 91, the one end (upper portion) of the laser processing head 2 is attached to the head support body 4 that is supported by the carriage 5 with the overload protection device 92 interposed therebetween. If the movement of the other end (lower portion), i.e., the tip end, of the laser processing head 2 is obstructed by an obstacle or the like, the laser processing head 2 goes to take the lean posture from its normal posture (vertical posture). At this moment, the overload protection device 92 allows the lean posture, and the controller 94 detects the lean and immediately stops the motion of the carriage 5. The movement of the laser processing head 2 does not continue while the movement of the tip end of the laser processing head 2 is restricted, and no excessive load is applied to the laser processing head 2.

The posture change of the laser processing head 2 from the normal posture (vertical posture) to the lean posture is permitted by the rotation of the inner ring 11 of the spherical plain bearing SB. During the rotation of the inner ring 11 from the normal posture to the lean posture where the carriage 5 stops, airflow between an external space VG of the laser processing head 2 and an optical path space VL of the laser beam formed inside the laser processing head 2 is blocked. In other words, the above-mentioned airtight state is formed and maintained.

Even if the nozzle 22 contacts with an obstacle while the laser processing head 2 is moving, the optical path space VL is not communicated with the external space VG and the laser processing head 2 is protected from overloading. Therefore, the optical path space VL is not contaminated by fumes and so on and thus maintenance of the laser processing machine 91 is easy.

After the operation of the laser processing machine 91 with the lean posture of the laser processing head 2 is stopped, the laser processing machine 91 is restarted after resolving the cause of the problem. At the time of restart, the inner ring 11 is reset to its normal posture position. The resetting operation of the inner ring 11 to the normal posture position is done by using the inner ring position calibrators 7. The inner ring position calibrators 7 are described below, mainly with reference to FIG. 3.

As shown in FIG. 3 and FIG. 1B, a pair of the inner ring position calibrators 7 are provided in the overload protection device 92, and the detector 8 is located between these inner ring position calibrators 7. Since each of the inner ring position calibrators 7 has symmetrically the same structure, the inner ring position calibrator 7 on the right side in FIG. 3 will be described.

The inner ring position calibrator 7 has a female screw 11c formed in the inner ring 11 and a base 71 attached to the outer ring 12. A tapered pin 72 is used for the position calibrating operation. The female screw 11c is a blind hole opened on the outer circumferential face 11b of the inner ring 11 and is formed at a position inclined by 45° with respect to the vertical axis CL11V. The axis of the female screw 11c is coincide with the radial direction of the inner ring 11. An adjustment hole 12c is formed in the outer ring 12 at a position inclined by 45° with respect to the vertical axis CL12V to be corresponded to the female screw 11c. The adjustment hole 12c is a through hole having an inner diameter sufficiently larger than that of the female screw 11c.

The base 71 has a hollow cylinder 71a and a pair of flanges 71b. The flanges 71b extend outwardly from the middle of the hollow cylinder 71a. An inner hole of the hollow cylinder 71a is formed as a tapered hole 71a1 whose inner diameter gradually decreases radially inward. One end of the hollow cylinder 71a is inserted into the adjustment hole 12c, and the flanges 71b are fixed to female screws (not shown in the drawings) formed on the outer face of the outer ring 12 by fasteners N7, respectively. The fasteners N7 in the present embodiment are bolts. The inner diameter of the tapered hole 71a1 at the above-mentioned one end of the hollow cylinder 71a is smaller than the inner diameter at its another end.

The tapered pin 72 has a knob 72a, a base shaft 72b, a tapered shank 72c, and a male screw 72d. The knob 72a is formed to have a disk-shape. The base shaft 72b is a round shaft having a constant outer diameter and extends perpendicularly from the center of the knob 72a. The tapered shank 72c extends from an end of the base shaft 72b coaxially with the base shaft 72b and has a conical trapezoidal shape having an outer diameter decreasing toward its end. A taper angle of an outer circumferential face of the tapered shank 72c is the same as a taper angle of an inner circumferential face of the tapered hole 71a1 of the base 71. The male screw 72d extends from the end of the tapered shank 72c coaxially with the base shaft 72b and screws into the female screw 11c. An axis of the tapered hole 71a1 coincides with the radial direction of the outer ring 12. An axis of the female screw 11c coincides with the radial direction of the inner ring 11.

When the axis of the tapered hole 71a1 is coincided with the axis of the female screw 11c, the vertical axis CL11V of the inner ring 11 is made coincided with the axis CL8 of the detector 8, and the overload protection device 92 is in the normal posture. When resetting the inner ring 11 in the lean posture to the normal posture, an operator first loosens at least one of the fixing elements N12 and N13 of the fastener TB to allow the inner ring 11 to slide and rotate substantially freely against the outer ring 12.

Subsequently, the operator coarsely adjusts the position of the inner ring 11 by hand so that the entire female screw 11c is visible through the tapered hole 71a1. Then, as shown in the inner ring position calibrator 7 on the right side in FIG. 3, the operator inserts the tapered pin 72 into the tapered hole 71a1 of the base 71 (see an arrow DRb) and screws the male screw 7d into the female screw 11c. Also, with respect to the inner ring position calibrator 7 on the left side in FIG. 3, the male screw 72d of the tapered pin 72 is screwed into the female screw 11c. The tapered pin 72 is guided by the tapered hole 71a1 and the tapered shank 72c, so that the axis of the tapered hole 71a1 and the axis of the female screw 11c are coincided with each other. As a result, the inner ring 11 is calibrated at the normal posture position.

In a state where the inner ring 11 is calibrated at the normal posture position, the fixing elements N12 or N13 of the fastener TB are tightened to secure the inner ring 11 by a frictional force with the outer ring 12. After tightening the fastener TB, the tapered pins 72 are loosened and removed to complete the resetting operation of the inner ring 11.

In this manner, the resetting operation of the overload protection device 92 can be done only by simple fastening and loosening of the male screws 72d and the female screws 11c. Therefore, there is no variability in the calibration of the inner ring 11, and the burden on the operator can be reduced.

As described in detail above, in the overload protection device 92 and the laser processing machine 91 equipped with it, the overload protection device 92 immediately detects an occurrence of an abnormality, such as a contact with an obstacle that is indicated by the lean posture of the laser processing head 2, and stops the movement of the laser processing head 2. Therefore, no overload is applied to the laser processing head 2. The detectable contacting directions of the laser processing head 2 are all horizontal 360° directions, and thereby its detection range becomes wide. In addition, since the position sensor detects the upward shift of the detection member 821, which is a ball, is detected by the position sensor, the detection sensitivity is high and the detection operation is stable.

In the overload protection device 92, the external space VG and the internal optical path space VL are segregated from each other to establish the airtight state during the detection operation of the occurrence of an abnormality indicated by the lean of the laser processing head 2. Therefore, the optical path space VL is not contaminated by the external space VG, and thus maintenance is easy.

The present invention is not limited to the above-described embodiment and may be modified within a scope that doesn't deviate from the subject matter of the present invention.

Detection of the rotation of the inner ring 11 by the detector 8 is not limited to the detection based on the upward shift of the detection member 821, but other detection methods using an optical sensor or a distance measuring sensor may be employed. Retention of the inner ring 11 is not limited to the retention by the frictional force with the lower outer ring 12BT and the upper outer ring 12UT. And, the frictional force between the inner ring 11 and the outer ring 12 may be generated by an application of pressure by air, an application of elastic repulsive force such as a spring, or an application of a magnetic attraction or repulsive force by a magnet.

In the above embodiment, as shown in FIG. 2A, a horizontal distance Ld between the vertical optical axis of the laser beam LB emitted from the nozzle 22 and the axis CL8 (see also FIG. 4a) of the detector 8 is relatively short. Therefore, it can be regarded practically that the contact of the laser processing head 2 does not cause the inner ring 11 to rotate around the vertical axis CL11V. In other words, the rotation of the inner ring 11 caused by the collision of the laser processing head 2 is regarded as follows (1) to (3) (see FIG. 2A). (1) Rotation about the horizontal axis CL11H caused by a contact in the front-back movement of the laser processing head 2. (2) Rotation about the axis CL11 caused by a contact in the left-right movement of the laser processing head 2. (3) Rotation about the bearing center C11 caused by a combination of the above (1) and (2).

If the distance Ld is relatively long and a rotation of the inner ring 11 about the vertical axis CL11V occurs enough not to ignore practically the rotation, the rotation about the vertical axis CL11V can be detected by providing another detector equivalent to the detector 8 on the horizontal axis CL11H.

The overload protection device 92 according to the above embodiment includes the spherical plain bearing SB having the inner ring 11 and the outer ring 12. The inner ring 11 is integrated into the laser processing head 2 through which the laser beam LB is emitted. The outer ring 12 is integrated into the head support body 4 that supports the laser processing head 2 and moves in directions perpendicular to the emission direction of the laser beam LB. The inner ring 11 is rotatably supported by the outer ring 12 within the given angle range θm from the normal posture position via the spherical face of the spherical plain bearing SB. The optical path space VL of the laser beam LB formed inside the laser processing head 2 forms the airtight state with the external space VG of the laser processing head 2 by the inner ring 11 and the outer ring 12 during the rotation within the given angle range θm from the normal posture position. Therefore, according to the overload protection device 92 in the above embodiment, when the laser processing head 2 contacts with an obstacle while moving, the laser processing head 2 can be protected from being overloaded without communicating the optical path space VL with the external space VG.

In the overload protection device 92 according to the above embodiment, the outer ring 12 has the first outer ring 12UT having a half-ring shape, the second outer ring 12BT having a half-ring shape, and the fastener TB that tightens the first outer ring 12UT and the second outer ring 12BT onto the outer circumferential face 11b of the inner ring 11. The inner ring 11 is held rotatably by the outer ring 12 such that an external force required for rotating the inner ring 11 is adjusted by adjusting the tightening of the fastener TB. Therefore, according to the overload protection device 92 in the above embodiment, it is possible to prevent the inner ring 11 from being unintentionally rotated by a slight external force. Also, in the above embodiment, the laser processing machine 91 is configured to be stopped when the inner ring 11 rotates. This configuration prevents the laser processing machine 91 from stopping unintentionally due to an unintended rotation of the inner ring 11.

In addition, the overload protection device 92 according to the above embodiment further includes the inner ring position calibrators 7 for resetting the inner ring 11, which has been rotated from the normal posture position, to the normal posture position. The inner ring position calibrator(s) 7 has the tapered hole 71a1 formed in the outer ring 12, the female screw 11c formed in the inner ring 11, and the tapered pin 72. The axis of the tapered hole 71a1 coincides with the radial direction of the outer ring 12, and the axis of the female screw 11c coincides with the radial direction of the inner ring 11. The tapered pin 72 has a tapered shank 72c having the same taper angle as the taper angle of the tapered hole 71a1, and the male screw 72d formed at the end of the tapered shank 72c to be screwed into the female screw 11c. The inner ring position calibrators 7 are configured to position the inner ring 11 at the normal posture position by inserting the tapered pin 72 into the tapered hole 71a1 and fastening the male screw 72d with the female screw 11c. Therefore, according to the overload protection device 92 in the above embodiment, its recovery operation can be simplified and burden on an operator is reduced. Also, in the above embodiment, the laser processing machine 91 is configured to be stopped when the inner ring 11 is rotated. In this configuration, the time from stop to recovery can be shortened and the utilization rate of the laser processing machine 91 can be improved.

The laser processing machine 91 according to the above embodiment includes the overload protection device 92 and the controller 94 that controls the movement of the head support body 4. The overload protection device 92 has the detector 8 that outputs the detection signal 8SG when detecting the rotation of the inner ring 11 from the normal posture position. The controller 94 stops the movement of the head support body 4 based on the detection signal 8SG. Therefore, according to the laser processing machine 91 in the above embodiment, when the laser processing head 2 contacts with an obstacle during its movement, the laser processing head 2 can be protected from being overloaded without communicating the optical path space VL with the external space VG.

In the laser processing machine 91 according to the above embodiment, in a case where the detector 8 detects the rotation of the inner ring 11 from the normal posture position while the head support body 4 is moving at its maximum speed, the rotational angle of the inner ring 11 from the detection time to the stop time of the head support body 4 is within the given angle range θm. Therefore, according to the laser processing machine 91, regardless of the moving speed of the laser processing head, the overload to the laser processing head 2 caused by a contact of the inner ring 11 with the outer ring 12 or the head support body 4 can be prevented.

The present invention is not limited to the above embodiment and may be implemented in various embodiments with appropriate modifications. The entire contents of Japanese Patent Application No. 2023-004399 (filed on January 16, 2023) are hereby incorporated by reference. The invention is described above with reference to the embodiment of the present invention, but the invention is not limited to the above embodiment. Scope of the present invention is determined in the context of the claims.

## Claims

1. An overload protection device comprising:
a spherical plain bearing provided with an inner ring integrated into a laser processing head through which a laser beam is emitted, and an outer ring integrated into a head support body that supports the laser processing head and moves in directions perpendicular to an emission direction of the laser beam,
wherein the inner ring is rotatably supported by the outer ring within a given angle range from a normal posture position via a spherical face of the spherical plain bearing, and
wherein an optical path space of the laser beam formed inside the laser processing head forms an airtight state with an external space of the laser processing head by the inner ring and the outer ring during a rotation within the given angle range from the normal posture position.

2. The overload protection device according to claim 1,
wherein the outer ring has a first outer ring having a half-ring shape, a second outer ring having a half-ring shape, and a fastener that tightens the first outer ring and the second outer ring onto an outer circumferential face of the inner ring, and
wherein the inner ring is held rotatably by the outer ring such that an external force required for rotating the inner ring is adjusted by adjusting tightening of the fastener.

3. The overload protection device according to claim 1 or 2, further comprising
an inner ring position calibrator for resetting the inner ring, which has been rotated from the normal posture position, to the normal posture position,
wherein the inner ring position calibrator has a tapered hole formed in the outer ring, a female screw formed in the inner ring, and a tapered pin,
wherein the tapered pin has a tapered shank having the same taper angle as a taper angle of the tapered hole, and a male screw formed at an end of the tapered shank to be screwed into the female screw, and
the inner ring position calibrator is configured to position the inner ring at the normal posture position by inserting the tapered pin into the tapered hole and fastening the male screw with the female screw.

4. A laser processing machine comprising:
an overload protection device according to any one of claims 1 to 3; and
a controller that controls a movement of the head support body,
wherein the overload protection device has a detector that outputs a detection signal when detecting the rotation of the inner ring from the normal posture position, and
the controller stops the movement of the head support body based on the detection signal.

5. The laser processing machine according to claim 4,
wherein, in a case where the detector detects the rotation of the inner ring from the normal posture position while the head support body is moving at a maximum speed, a rotational angle of the inner ring from a detection time to a stop time of the head support body is within the given angle range.
